# EUROPEAN PATENT SPECIFICATION

(11) **EP 1 749 632 B1**
(45) Date of publication and mention of the grant of the patent: **20.10.2010**
(21) Application number: 05736548.8
(22) Date of filing: 28.04.2005
(51) Int. Cl.: B29C 33/02, B29C 35/02

(54) **TIRE VULCANIZING MOLD**
REIFENVULKANISIERFORM
MOULE DE VULCANISATION DE PNEUMATIQUE

(30) Priority: 27.05.2004 JP 2004158082
(43) Date of publication of application: 07.02.2007
(73) Proprietor: Bridgestone Corporation, Tokyo 104-8340 (JP)
(72) Inventor: OGAWA, Yuichiro BRIDGESTONE CORPORATION, Kodaira-shi, Tokyo 1878531 (JP)
(74) Representative: Whalley, Kevin
(86) International application number: PCT/JP2005/008169
(87) International publication number: WO 2005/115710

(56) References cited:
- DE-A1- 1 579 148
- FR-A1- 2 306 070
- GB-A- 1 293 618
- JP-A- 2000 127 173
- JP-A- 2000 127 173
- JP-A- 2004 130 636
- JP-A- 2004 130 636

## Description

The present invention relates to a tire vulcanizing mold for carrying out a tire vulcanization method, wherein a green tire is formed on a core made of a rigid material, and introduced into the vulcanizing mold together with the core for vulcanization, while preventing spew of the rubber material from a cavity defined by the core and the vulcanizing mold and resultant formation of surface defects in a product tire, such as so-called bares.

It is known to form a green tire on a core having a substantially toroidal contour shape as a whole, which is formed of a rigid material to have an outer surface shape that corresponds to the inner surface shape of a product tire, and which can be assembled and disassembled. The green tire is formed by extruding a constant volume of rubber material onto the core and winding and laminating the rubber material thereon. Such a green tire has more or less fluctuation in volume of the rubber material, besides which it undergoes thermal expansion when heated within the molding cavity. Thus, in order to prevent spewing of the rubber material from the mold cavity and resultant formation of bares in the product tire, the applicant proposed a technology, as disclosed in Japanese Patent Application Laid-open Publication No. 2002-264134, wherein increase in temperature of the tire within a mold cavity defined by the core and the molding surface of the vulcanizing mold is compensated by deformation of the core in a direction for increasing the volume of the mold cavity. Attention is also drawn to the disclosures of JP-2000-127173 A, JP-2004-130636 A, GB-1293618 A, and FR-2306070 A.

With the above-mentioned technology according to the applicant's earlier proposal, the volume of the mold cavity is increased by the deformation of the core to have a reduced width or reduced peripheral length. The rigid cores are associated with individual tires from formation of a green tire up to the completion of the vulcanization, and a larger number of rigid cores must be prepared as compared to the vulcanizing mold. As such, the above-mentioned earlier proposal inevitably gives rise to a problem of increase in the installation cost, since it would be necessary for each and every rigid core to be subjected to specific machining. On the other hand, there is also a problem that the deformation of the cores to have a reduced width or peripheral length may not sufficiently absorb a large fluctuation or change in the volume of rubber.

The present invention eliminates these problems, and its primary object is to provide a tire vulcanizing mold for carrying out a tire vulcanization method, in particular a vulcanizing mold comprising a tread mold member, side ring members and bead ring members, capable of suppressing increase in the installation cost and effectively absorbing large fluctuations and changes in the rubber volume.

The present invention is concerned with a method for vulcanizing a tire, wherein a green tire is vulcanized within a cavity defined by a core comprised of a rigid material and having an outer shape that corresponds to an inner surface shape of a product tire, and capable of being assembled and disassembled, and also by a vulcanizing mold surrounding the core, wherein the vulcanizing mold comprises side ring members and a tread mold member, at least one of the side ring members and the tread mold member having a molding surface, which is entirely or partly moved in a direction for increasing the volume of the cavity, e.g. upon introduction of the green tire into the mold cavity or increase in volume of the tire within the mold cavity. The term "tread mold member" as used herein refers to that portion of the vulcanizing mold, which serves to vulcanize and mold the tire tread portion, whether the vulcanizing mold is a full mold or a segmented mold.

In this instance, even when the green tire formed on the rigid core has a rubber volume, which fluctuates from a predetermined value to a smaller volume side, it is possible to sufficiently absorb such fluctuation by designing the initial volume of the mold cavity to a value smaller than the predetermined volume.

In the method, the vulcanizing mold may further comprise bead ring members, which also are moved together with said one of the side ring members and the tread mold member.

According to an aspect of the present invention, there is provided a vulcanizing mold comprising: a tread mold member for molding a tire tread portion, side ring members for molding tire side portions, and bead ring members for molding tire bead portions, wherein said side ring members each comprises an annular supporting frame having a part of the molding surface, a movable plate fitted with the supporting frame and movable in a direction of its center axis as being guided by the supporting frame, said movable plate having a remaining molding surface (and an annular shape, for example), a spring means for urging the movable plate in a direction to project from the supporting frame, and a restraining means for defining a maximum projected position of the movable plate.

According to another aspect of the present invention, there is provided a vulcanizing mold comprising: a plurality of segments for molding a tire tread portion, side ring members for molding tire side portions, and bead ring members for molding tire bead portions, wherein said segments each comprises a holder having an arcuate planar shape, a plurality of molding pieces arranged in alignment with each other on an inner peripheral side of the holder, said molding pieces being movable in a radial direction as being guided by the holder and each having a molding surface, a spring means for urging each said molding piece radially inwards, and a restraining means for defining a maximum projected position of the molding piece with reference to the holder.

It is preferred that the maximum projected position of the movable plate or the molding piece is defined under an urging force of the spring means, i.e. under a preloaded condition as obtained by the spring force.

In accordance with the invention, the restraining means comprises a male screw member extending through the supporting frame or the holder, wherein the male screw member has a tip end threadedly engaged with the movable plate or the molding piece, and a head engaged with the supporting frame or the holder.

In this instance, it is preferred that a shim is interposed between the head of the male screw member and the supporting frame or the holder, for defining the maximum projected position of the movable plate or the molding piece from the supporting frame or the holder.

On the other hand, it is also possible to arrange a stopper between the supporting frame and the movable plate, or between the holder and the molding piece, for defining an approaching limit therebetween.

In the vulcanizing mold described above, the bead ring members may be entirely or partly integrated with the movable plate.

With the vulcanizing method, the fluctuation in the rubber volume of the individual green tires and the increase in the rubber volume as a result of change in temperature can be absorbed by the deformation of the vulcanization mold, and in particular by the movement of the entirety or part of at least one of the side ring members and the tread mold member. Because the total number of the vulcanization molds is far smaller than that of the cores, it is possible to effectively suppress increase in the installation cost.

In this method, furthermore, the movable plate forming part of the side ring member and/or the molding piece forming part of the tread mold member is moved by a simple arrangement inwards or outwards relative to the mold cavity by a required amount, so that the fluctuation or change in the rubber volume can be sufficiently absorbed regardless of the magnitude thereof.

In this instance, for example, the initial position of the movable plate and/or molding piece is determined so as to prevent formation of bares or the like under an assumption of a tire having the minimum rubber volume. This is an effective measure since, upon production of a tire having a larger rubber volume, the moving plate, etc., can be moved in a direction for increasing the volume of the molding cavity and thereby absorbing fluctuation or the like of the rubber volume, and sufficiently prevent spewing of the rubber material or formation of bares or the like.

In the method, when spewing of the rubber material or formation of bares is prevented by moving the side ring member having a relatively simple molding surface as compared to the tread mold member having a complex molding surface such as a tread pattern, noticeable discontinuities may be formed at the junction of the moving portion and the non-moving portion, as compared to the case in which the tread mold member is moved. However, when the side ring member is moved in the axial direction of the mold cavity having a substantially toroidal contour shape as a whole, so as to absorb the fluctuations or the like of the rubber volume, it is possible to more effectively prevent spewing of the rubber material as compared to the case in which the tread mold member is entirely or partly moved in the radial direction of the mold cavity for absorbing such fluctuations or the like.

When the bead ring member forming part of the vulcanizing mold is also moved entirely or partly, together with the above-mentioned one of the side ring members and the tread mold member, from the initial position in a direction for increasing the volume of the molding cavity, it is possible to accommodate a larger fluctuation or the like of the rubber volume.

In one embodiment of the vulcanizing mold for carrying out the method, the side ring members each comprises an annular supporting frame, a movable plate fitted with the supporting frame and movable in a direction of its center axis as being guided by the supporting frame, a spring means for urging the movable plate in a direction to project from the supporting frame, i.e. in a direction for decreasing the volume of the mold cavity, and a restraining means for defining a maximum projected position, i.e. the initial position, of the movable plate. Therefore, notwithstanding a highly simplified structure of the vulcanizing mold, it is possible to sufficiently absorb the fluctuations or changes in the rubber volume of the green tire by causing a positive movement of the movable plate in a direction for decreasing the volume of the mold cavity. This means that spewing of the rubber material from the mold cavity or formation of bares or the like can be effectively prevented, even upon large fluctuations or the like of the rubber volume.

Since the fluctuations or the like of the rubber material can be absorbed by causing a movement of the moving plate that is provided for the side ring member of the vulcanizing mold, it is possible to significantly reduce the installation cost as compared to the case in which the entirety of the rigid core is provided with a deforming means or moving means. Also, by controlling the moving amount of the movable plate, it is possible to more delicately accommodate the fluctuations or the like of the rubber volume.

These advantages can also be achieved by a vulcanizing mold in the form of a segmented mold, wherein the segments each comprises a holder having an arcuate planar shape, a plurality of molding pieces arranged in alignment with each other on an inner peripheral side of the holder, and movable in a radial direction as being guided by the holder and each having a molding surface, a spring means for urging each molding piece radially inwards, and a restraining means for defining a maximum projected position of the molding piece with reference to the holder. With such an embodiment of the present invention, notwithstanding the simplified structure of the vulcanizing mold, it is possible to effectively prevent spewing of the rubber material from the mold cavity or formation of bares or the like, even upon large fluctuations or the like of the rubber volume, by causing a positive movement of the molding piece in a direction for decreasing the volume of the mold cavity.

Here also, since the fluctuations or the like of the rubber material can be absorbed by causing a movement of the molding piece that is provided for the holder, it is possible to significantly reduce the installation cost as compared to the case in which the entirety of the rigid core is provided with a deforming means or moving means.

In the above-mentioned embodiments of the vulcanizing mold described above, the maximum projected position of the movable plate or the molding piece may be defined under an urging force of the spring means in the form of dish springs or coil springs, so as to apply a preloading force to the moving plate or the like at the initial position in a direction for decreasing the volume of the mold cavity. Such an arrangement serves to prevent unstable behaviors of the movable plate or the like, such as chattering, while sufficiently maintaining the predetermined urging function with respect to the tire within the mold cavity and ensuring a positive escapement movement of the movable plate or the like in response to an increased rubber volume.

In such a vulcanizing mold, the restraining means comprises a male screw member extending through the supporting frame or the holder, and having a tip end threadedly engaged with the movable plate or the molding piece, and a head engaged with the supporting frame or the holder. In this instance, notwithstanding the simplified structure, it is possible to simply and easily define the desired maximum projected position of the movable plate or the molding piece, and facilitate the assembly and disassembly of the movable plate or the molding piece relative to the supporting frame or the holder.

There may be interposed a shim between the head of the male screw member and the supporting frame or the holder. When the position of the head of the male screw member relative to the supporting frame or the holder is adjusted by an adjustment of the thickness of the shim, the approaching amount of the movable plate or the like toward the supporting frame or the holder can be controlled under a required thread engagement amount or a constant thread engagement amount of the male screw member having a constant length of the shank into the movable plate or the molding piece, so as to simply and accurately define the initial projected position of the movable plate or the like from the supporting frame or the holder.

The initial urging force applied by the spring means to the movable piece or the molding piece can be changed by an appropriate selection of the initial projected position.

On the other hand, when a stopper is arranged between the supporting frame and the movable plate, or between the holder and the molding piece, for defining an approaching limit therebetween, the stopper serves to positively define the maximum movement amount of the movable plate or the like in a direction for increasing the volume of the mold cavity, so as to eliminate the risk of excessive increase in the volume of the mold cavity.

In the vulcanizing mold described above, the bead ring members may be integrated with the movable plate, i.e. formed as a single piece element or connected integrally afterwards. In this instance, by moving the movable plate and the bead ring members as an integral unit, it is possible to enhance absorbing capability for the fluctuations or the like of the rubber volume, and avoid formation of step-like discontinuities or the like at the junction between the side ring members and the bead ring members.

The invention will be further described with reference to the accompanying drawings, wherein
FIG. 1 is a sectional view, as seen in a radial plane, showing the prominent part of a vulcanizing mold according to the present invention;
FIGS. 2(a) and 2(b) are perspective views showing the assembled state and disassembled state of the core, respectively.
FIG. 3 is an exploded perspective view schematically showing a lower side ring member.
FIG. 4 is a longitudinal-sectional view of the side ring member in an assembled state thereof.
FIG. 5 is a sectional view in enlarged scale, showing the prominent part of the side ring member for explaining the operation thereof.
FIGS. 6(a), 6(b) and 6(c) are sectional views in enlarged scale, showing examples of the surface in the side portion of a product tire.
FIG. 7 is a sectional view showing the lower half of a vulcanizing mold according to another embodiment of the present invention.
FIG. 8 is a sectional view showing the prominent part of a vulcanizing mold according to still another embodiment of the present invention.

The present invention will now be explained in further detail below with reference to some embodiments of the vulcanizing mold according to the present invention.

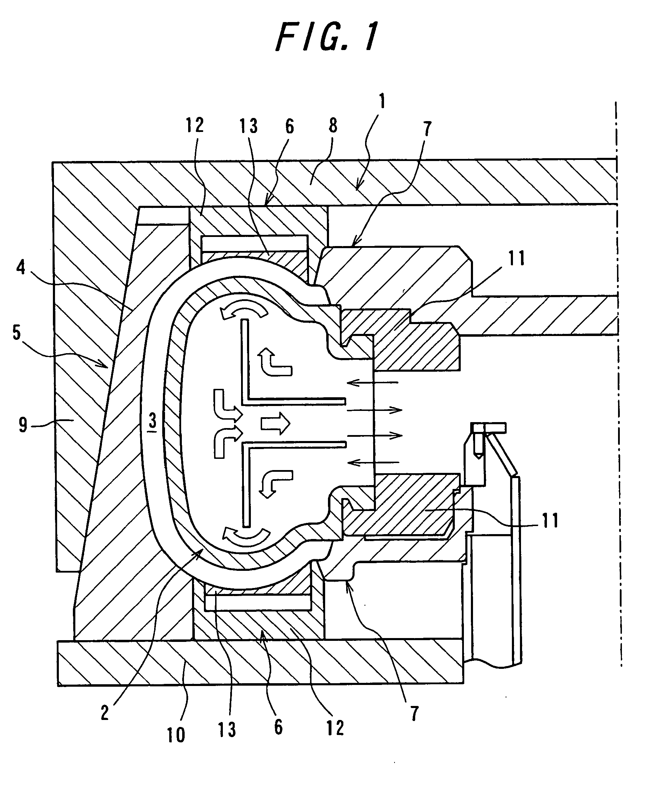

FIG 1 is a sectional view, as seen in a radial plane, showing prominent part of the vulcanizing mold according to the present invention, wherein reference numeral 1 denotes a vulcanizing mold in the form of a segmented mold, for example, and reference numeral 2 denotes a core made of a rigid material and having a substantially toroidal contour shape. The core 2 can be assembled and disassembled, and introduced into the interior of the vulcanizing mold 1 in a tightly closed state as shown, so as to define a mold cavity between the outer surface of the core 2 and the molding surface of the vulcanizing mold 1.

Here, the vulcanizing mold 1 is comprised of a tread mold member 5 for vulcanizing and molding the tire tread portion, which is divided into a plurality of arcuate segments 4, a pair of upper and lower side ring members 6, as seen in the drawings, for vulcanizing and molding the tire side portions, and a pair of upper and lower bead ring members 7, as also seen in the drawings, for vulcanizing and molding the tire bead portions.

Here, the vulcanizing mold 1 can be brought into a fully opened state by moving the segments 4 radially outwards, which are arranged on a lower platen 10, based on an upward movement of a cam ring 9 as a result of an upward movement of an upper platen 8, and also by moving the upper side ring member 6 and the upper bead ring member 7 based on the upward movement of the upper platen 8. In such an opened state, the core 2 can be introduced into the vulcanizing mold 1 together with a green tire formed on the outer surface thereof, and removed therefrom together with a product tire obtained by subjecting the green tire to vulcanization.

On the other hand, in order to bring the vulcanizing mold 1 into the tightly closed state, the upper platen 8 is moved downwards relative to the lower platen 10 so that the cam surface of the cam ring 9 causes the plurality of segments to be moved radially inwards into the reduced diameter position, in which they are in tight contact with each other in the circumferential direction to have a substantially toroidal shape.

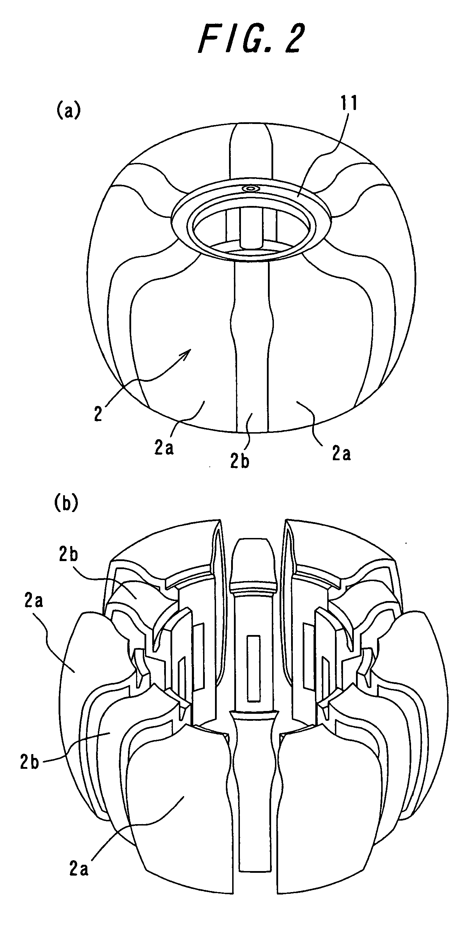

The core 2 has an inner surface shape corresponding to the outer surface shape of the product tire, and may be comprised of an aluminum alloy, for example. The core 2 can be brought into an assembled state as shown in the perspective view of FIG. 2(a), having a substantially toroidal shape as a whole. The core 2 can also be brought into a disassembled state as shown in the perspective view of FIG. 2(b), with a pair of upper and lower assembling rings 11 released, in which two kinds of hollow arcuate segments, i.e. large segments 2a and small segments 2b, are alternately situated on the radially outer side and inner side, respectively. In the disassembled state of the vulcanizing mold 1, the segments 2a, 2b can be removed from the center portion to outside, under a predetermined sequence.

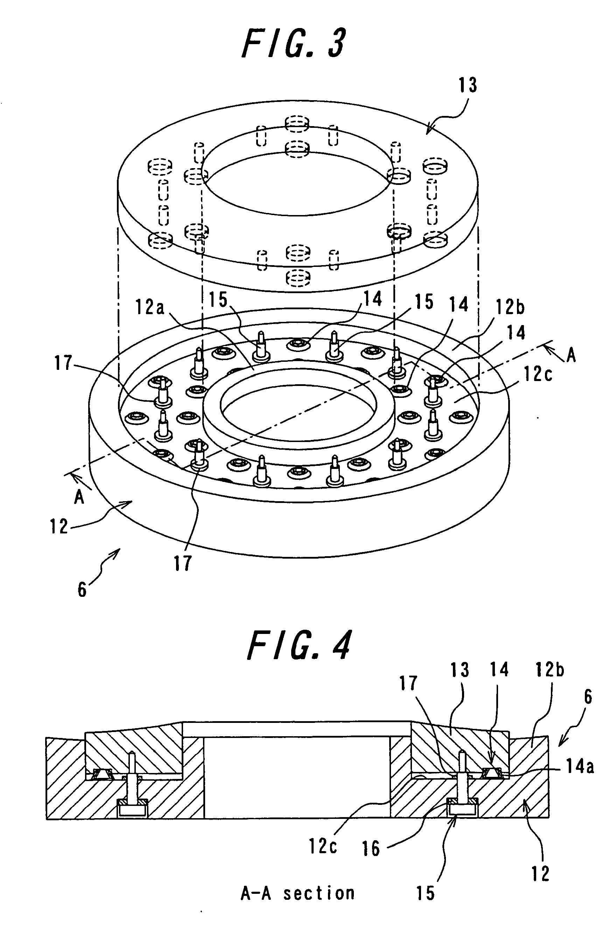

Referring back to FIG 1, the upper and lower side ring members 6 each includes an annular supporting frame 12 defining a part of the molding surface, fixedly secured to the upper or lower platen 8, 10 and having a substantially groove-shaped cross-section. Each side ring member 6 further includes a movable plate 13 fitted with a supporting frame 12 and movable, preferably slidable, in a direction of the center axis of the supporting frame 12, with the outer and inner peripheral surfaces guided by annular projected wall surfaces of the supporting frame 12, and defining the remaining molding surface, as shown by the exploded perspective view of FIG. 3 with reference to the lower side ring member 6, for example. The movable plate 13 is urged by a spring means 14 in the form of dish springs or coil springs, in a direction in which it projects from the supporting frame 12, as shown in the longitudinal-sectional view of FIG. 4. On the other hand, the initial position or the maximum projected position of the moving plate 13 relative to the supporting frame 12 is defined by a restraining means, in the form of male screw members 15 extending through the supporting frame 12.

Here, when the spring means 14 is comprised of a single dish spring or a plurality of dish springs 14a, for example, it is preferred that at least one of the supporting frame 12 and the movable plate 13 is provided with positioning recess or projection for the dish spring 14a, as shown. On the other hand, when the spring means 14 is comprised of coil springs, it is preferred that the supporting frame 12 and the movable plate 13 are both provided with positioning recess or projection.

As for such spring means 14, it is preferred that 10-50 springs in total, e.g. 12-24 springs as shown in FIG. 3, are provided as being spaced from each other by a constant distance in the circumferential direction and radial direction.

The male screw member 15 forming the restraining means extends through the supporting frame 12, and has a tip end threadedly engaged with the movable plate 13, and a head engaged with the supporting frame 12. In this instance, it is possible to bring the movable plate 13 to the predetermined maximum projected position relative to the supporting frame 12 preferably against the spring force of the spring means 14 by controlling, for example, the thread engagement amount of the tip end of the male screw member 15 relative to the movable plate 13, to thereby apply a preload to the movable plate 13 by means of the spring means 14.

Alternatively, if the certainty of the connection between the supporting frame 12 and the movable plate 13 is to be achieved under a constant thread engagement amount of the tip end of the male screw member 15 relative to the movable plate 13, there may be interposed a washer-like shim with a suitably selected thickness between the tip end of the male screw member 15 and the supporting frame 12, so as to more precisely position the movable plate 13 at the predetermined maximum projected position.

In the latter case, even when 10-20 male screw members 15 arranged in the circumferential direction of the movable plate 13 are each fully tightened to the maximum limit, the controlled thickness of the respective shims ensures a sufficient uniformity in terms of the projected amount of the movable plate 13 over the entire periphery. Therefore, as compared to the case in which the thread engagement amount of the male screw members 15 is adjusted individually, it is possible to further improve the positioning accuracy of the movable plate 13, and ensure a sufficient uniformity in terms of the tension applied to the male screw members 15 under the function of the spring means 14.

Referring to FIG. 4, the maximum projected position of the movable plate 13 relative to the supporting frame 12 is defined in the manner described above, while the approaching limit of the movable plate 13 toward the bottom surface 12c of the supporting frame 12 between annular projections 12a, 12b is defined so as to limit the movement of the movable plate 13 in a direction for increasing the volume of the mold cavity. To this end, for example, a stopper in the form of a washer-like shim 17 is arranged between the movable plate 13 and the supporting frame 12, so as to surround each male screw member 15 or selected male screw member 15. By appropriately selecting the thickness of the shim 17, it is possible to define the approaching limit of the movable plate 13 toward the bottom surface 12c, thereby positively preventing an excessive increase in the volume of the mold cavity.

With the vulcanizing mold 1 constructed as explained above, the green tire formed on the core is subjected to vulcanization by introducing the core 2 into the vulcanizing mold 1 together with the green tire thereon, tightly closing the vulcanizing mold 1, and heating the green tire enclosed in the mold cavity from the side of the vulcanizing mold 1 and also from the side of the core 2 while supplying a hot fluid into each of the hollow arcuate segments 2a, 2b of the core 2.

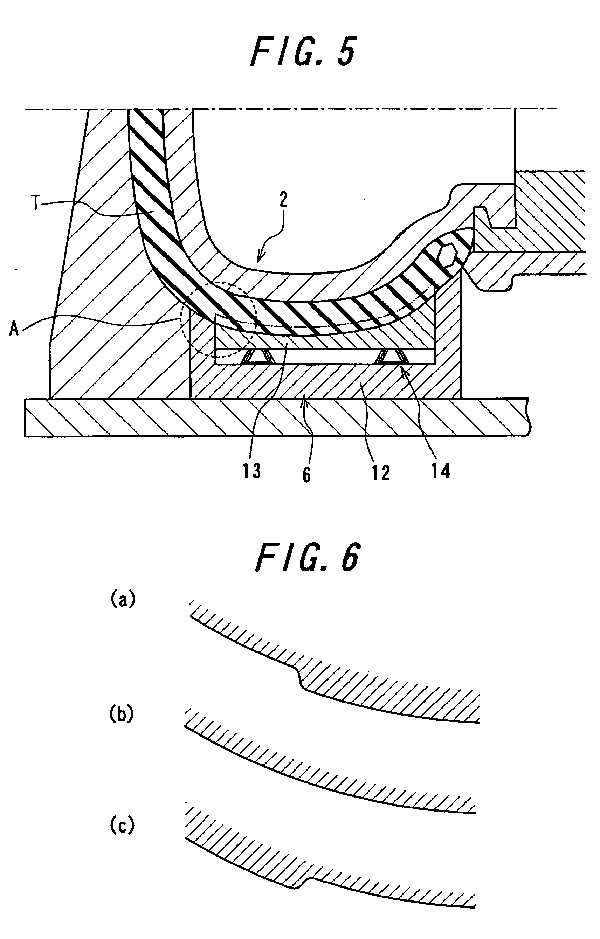

By this, as shown in the enlarged cross-sectional view of FIG. 5, starting from the initial position of the movable plate in which it is normally situated at the maximum projected position and preloaded by the spring means 14, the rubber material forming the green tire within the mold cavity undergoes a thermal expansion and causes the movable plate 13 to move in a pushing direction, i.e. in a direction for increasing the volume of the mold cavity, and flows into the increased space. As a result, the increase in the rubber volume of the green tire T due to the thermal expansion is effectively absorbed by the increase in the volume of the mold cavity under the action of a sufficient urging force by means of the spring means 14, and to thereby effectively prevent spewing of the rubber material from the mold cavity 3.

On the other hand, depending upon to the property of the rubber forming the green tire or volume of the rubber as formed, even when the green tire T is heated within the mold cavity, the rubber material may not undergo such thermal expansion as to increase the initial volume of the mold cavity in the manner described above. In such a case, the movable plate 13 supports the thermally expanded green tire T under a preloaded state, at the predetermined maximum projected position as shown by imaginary line in FIG. 5. In this way, formation of undesired bares in the product tire can be effectively prevented by the preloaded movable plate 13.

The same explanation applies with reference to the initial rubber volume of the green tire T as formed. Thus, when the initial rubber volume is considerably large, the movable plate 13 is pushed into a limit position in which the shim 17 becomes effective as the stopper, while when the initial rubber volume is considerably small, the movable plate 13 exerts a required urging force to the tire at the initial, maximum projected position.

In association with these cases, the enlarged cross-sectional views of FIGS. 6(a) to 6(c) illustrate the surface patterns of the product tire after vulcanization, at a location corresponding to the circled portion A in FIG 5. Thus, when the rubber volume of the green tire or thermal expansion of the rubber material is excessively large, and the movable plate 13 approaches the bottom surface 12c of the supporting frame 12, vulcanization of the green tire is performed such that a convex shape as shown in FIG. 6(a) is afforded to that portion of the green tire, which corresponds to the movable plate 13. When the rubber volume of the green tire and the thermal expansion of the rubber material are both appropriate, and the movable plate 13 undergoes a proper pushing movement, the surface of the tire side portion is molded so that those portions corresponding to the movable plate 13 and the supporting frame 12, respectively, are smoothly continued without any step, as shown in FIG 6(b). When the rubber volume of the green tire or thermal expansion of the rubber material is excessively small, and the movable plate 13 is either maintained at the initial, maximum projected position or only slightly pushed therefrom, vulcanization is performed such that a concave shape as shown in FIG 6(c) is afforded to the portion corresponding to the movable plate 13.

The convex or convex shape on the surface of the tire side portion, particularly those illustrated in FIGS. 6(a) or 6(c), may be effectively made less noticeable , for example by suitably designing the molding surface of the side ring member 6 so that linear unevenness, e.g. rim lines, decoration lines, etc., is intentionally formed at the location corresponding to the junction between the supporting frame 12 and the movable plate 13.

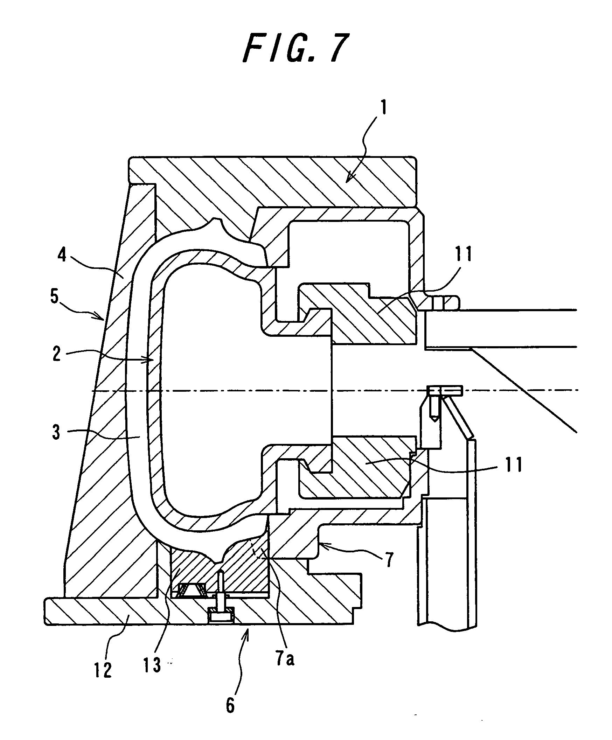

The side ring member 6 of the vulcanizing mold 1 has been described above with reference to an embodiment wherein it is divided into a supporting frame 12 and a movable plate 13 that can be moved relative to the supporting frame 12 in a direction for increasing the volume of the mold cavity. However, as shown in the lower half of FIG. 7, the bead ring member 7 for vulcanizing and molding the tire bead portion, preferably a portion 7a of the bead ring member 7 having a molding surface, may be integrated with the movable plate 13 such that this portion 7a can also be moved with the movable plate 13 in a direction for increasing the volume of the mold cavity.

The above-mentioned portion 7a of the bead ring member 7 can be integrated with the movable plate 13 by forming them as a single piece element or connecting them integrally afterwards. In either case, the movable plate 13 and the portion 7a of the bead ring member 7 are spring loaded by a spring means similar to that explained above, in a direction for decreasing the volume of the mold cavity, and their initial, maximum projected positions are defined by a restraining means comprised of male screw members.

With the vulcanizing mold according to this variation also, as in the previous embodiment, it is possible to effectively prevent spewing of the rubber material from the mold cavity and formation of bares in the product tire, upon fluctuations or changes in the rubber volume. Additionally, it is possible to eliminate the boundary between the movable plate 13 and the inner peripheral side of the supporting frame 12 and to thereby prevent formation of steps at such a boundary.

The vulcanizing mold according to the present invention has been described above with reference to a segmented mold, by way of example. However, the vulcanizing mold to which the present invention is applied may be a full mold, for example, in which the tread mold member is divided into the upper and lower halves.

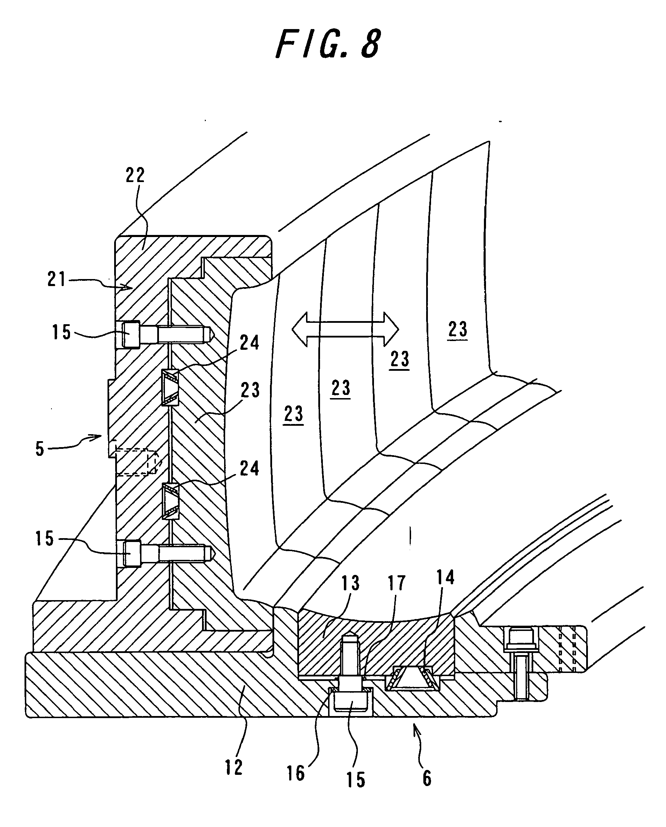

A vulcanizing mold according to another embodiment of the present invention is shown in the cross-sectional perspective view of FIG. 8. This embodiment is to absorb the volumetric fluctuation or change in the green tire T by a plurality of segments 21 forming the tread mold member 5, respectively. While the side ring member 6 is shown as adopting the structure of the previous embodiment, this is not an essential condition.
It is also possible to completely eliminate any moving parts from the side ring member, *per se.*

As shown in FIG 8, each segment 21 serves to vulcanize and mold the tire tread portion and comprises a holder 22 having an arcuate planar shape, a plurality of molding pieces 23 each having a molding surface and arranged at a regular pitch on the inner peripheral side of the holder 22. The molding piece 23 is movable in a radial direction as being guided by the upper and lower end portions of the holder 22. A spring means 24 similar to that of the previous embodiment is arranged between the molding pieces 23 and the holder 22, for urging the molding pieces 23 radially inwards. A restraining means for defining the maximum projected position of the molding pieces 23 relative to the holder 22 is in the form of male screw members 25, similar to those of the previous embodiment, which are threadedly engaged with the molding segments 23.

Although illustration has been omitted, a shim may be interposed between the head of the male screw member 25 and the holder 22 in engagement therewith, for adjusting the thread engagement amount of the male screw member 25 into the molding pieces 23. Also, a stopper may be arranged to surround the male screw member 25 between the holder 22 and the molding piece 23, for defining an approaching limit of the molding piece 23 relative to the inner peripheral surface of the holder 22.

When a green tire within the mold cavity is subjected to vulcanization, with these molding segments 21 aligned in a toroidal manner, if the volume of green tire T increases under a thermal expansion, the individual molding pieces 23 are retracted backwards against the spring means 24 to sufficiently absorb the increase in the volume, so that a large fluctuation or change in the rubber volume can be effectively absorbed as in the vulcanizing mold of the previous embodiment. On the other hand, the initial position of each molding segment 23 is determined such that a sufficient urging force is applied to the tire even when the green tire T has a volume smaller than the predetermined value, so as to effectively prevent formation of undesirable bares or the like in the product tire.

## Claims

1. A tire vulcanizing mold (1) comprising a tread mold member (5) for molding a tire tread portion, side ring members (6) for molding tire side portions, and bead ring members (7) for molding tire bead portions, wherein:
said side ring members (6) each comprises an annular supporting frame (12) having a part of the molding surface, a movable plate (13) fitted with the supporting frame and movable in a direction of its center axis as being guided by the supporting frame, said movable plate having a remaining molding surface, a spring means (14) for urging the movable plate in a direction to project from the supporting frame, and a restraining means (15) for defining a maximum projected position of the movable plate;
wherein said restraining means comprises a male screw member (15) extending through the supporting frame (12), said male screw member having a tip end threadedly engaged with the movable plate (13), and a head engaged with the supporting frame.

2. A tire vulcanizing mold (1) comprising: a plurality of segments (21) for molding a tire tread portion, side ring members (6) for molding tire side portions, and bead ring members (7) for molding tire bead portions, wherein:
said segments (21) each comprises a holder (22) having an arcuate planar shape, a plurality of molding pieces (23) arranged in alignment with each other on an inner peripheral side of the holder, said molding pieces being movable in a radial direction as being guided by the holder and each having a molding surface, a spring means (24) for urging each said molding piece radially inwards, and a restraining means (25) for defining a maximum projected position of the molding piece with reference to the holder;
wherein said restraining means comprises a male screw member (25) extending through the holder (22), said male screw member having a tip end threadedly engaged with the molding piece (23), and a head engaged with the holder.

3. A tire vulcanizing mold as claimed in claim 1 or 2, wherein the maximum projected position of the movable plate (13) or the molding piece (23) is defined under an urging force of said spring means (14; 24).

4. A tire vulcanizing mold as claimed in any of claims 1 to 3, further comprising a shim interposed between the head of the male screw member (15; 25) and the supporting frame (12) or the holder (22).

5. A tire vulcanizing mold as claimed in any of claims 1 to 4, further comprising a stopper (17) arranged between the supporting frame (12) and the movable plate (13), or between the holder (22) and the molding piece (23), for defining an approaching limit therebetween.

6. A tire vulcanizing mold as claimed in claim 1 or any of claims 3 to 5, wherein said bead ring members (7) are integrated with said movable plate (13).

## Patentansprüche

1. Reifenvulkanisierform (1), die aufweist: ein Laufflächenformelement (5) für das Formen eines Reifenlaufflächenabschnittes; Seitenringelemente (6) für das Formen der Reifenseitenabschnitte; und Wulstringelemente (7) für das Formen der Reifenwulstabschnitte, wobei:
die Seitenringelemente (6) jeweils aufweisen: einen ringförmigen Stützrahmen (12) mit einem Teil der Formoberfläche; eine bewegliche Platte (13), die an den Stützrahmen angepasst und in einer Richtung ihrer Mittelachse beweglich ist, während sie durch den Stützrahmen geführt wird, wobei die bewegliche Platte eine restliche Formoberfläche aufweist; eine Federeinrichtung (14) für das Treiben der beweglichen Platte in einer Richtung, um aus dem Stützrahmen vorzustehen; und eine Befestigungseinrichtung (15) für das Definieren einer maximalen vorstehenden Position der beweglichen Platte,
wobei:
die Befestigungseinrichtung ein Außenschraubenelement (15) aufweist, das sich durch den Stützrahmen (12) erstreckt, wobei das Außenschraubenelement ein Ende, das mit der beweglichen Platte (13) verschraubbar in Eingriff gebracht wird, und einen Kopf aufweist, der mit dem Stützrahmen in Eingriff gebracht wird.

2. Reifenvulkanisierform (1), die aufweist: eine Vielzahl von Segmenten (21) für das Formen eines Reifenlaufflächenabschnittes; Seitenringelemente (6) für das Formen der Reifenseitenabschnitte; und Wulstringelemente (7) für das Formen der Reifenwulstabschnitte,
wobei:
die Segmente (21) jeweils aufweisen: eine Halterung (22) mit einer bogenartigen ebenen Form; eine Vielzahl von Formteilen (23), die in Ausrichtung miteinander auf einer inneren Umfangsseite der Halterung angeordnet sind, wobei die Formteile in einer radialen Richtung beweglich sind, während sie durch die Halterung geführt werden, und die jeweils eine Formoberfläche aufweisen; eine Federeinrichtung (24) für das Treiben eines jeden Formteils radial nach innen; und eine Befestigungseinrichtung (25) für das Definieren einer maximalen vorstehenden Position des Formteils mit Bezugnahme auf die Halterung,
wobei die Befestigungseinrichtung ein Außenschraubenelement (25) aufweist, das sich durch die Halterung (22) erstreckt, wobei das Außenschraubenelement ein Ende, das mit dem Formteil (23) verschraubbar in Eingriff gebracht wird, und einen Kopf aufweist, der mit der Halterung in Eingriff gebracht wird.

3. Reifenvulkanisierform nach Anspruch 1 oder 2, bei der die maximale vorstehende Position der beweglichen Platte (13) oder des Formteils (23) unter einer treibenden Kraft der Federeinrichtung (14; 24) definiert wird.

4. Reifenvulkanisierform nach einem der Ansprüche 1 bis 3, die außerdem eine Unterlegscheibe aufweist, die zwischen dem Kopf des Außenschraubenelementes (15; 25) und dem Stützrahmen (12) oder der Halterung (22) angeordnet ist.

5. Reifenvulkanisierform nach einem der Ansprüche 1 bis 4, die außerdem einen Anschlag (17) aufweist, der zwischen dem Stützrahmen (12) und der beweglichen Platte (13) oder zwischen der Halterung (22) und dem Formteil (23) für das Definieren einer Annäherungsgrenze dazwischen angeordnet ist.

6. Reifenvulkanisierform nach Anspruch 1 oder einem der Ansprüche 3 bis 5, bei der die Wulstringelemente (7) mit der beweglichen Platte (13) zusammenhängend sind.

## Revendications

1. Moule de vulcanisation d'un bandage pneumatique (1), comprenant un élément de moulage de la bande de roulement (5) pour mouler une partie de bande de roulement du bandage pneumatique, des éléments annulaires de moulage des flancs (6) pour mouler les parties de flanc du bandage pneumatique, et des éléments annulaires de moulage des talons (7) pour mouler les parties de talon du bandage pneumatique, dans lequel:
lesdits éléments annulaires de moulage de flancs (6) comprennent chacun un cadre de support annulaire (12), comportant une partie de la surface de moulage, une plaque mobile (13) fixée sur le cadre de support et pouvant être déplacée dans la direction de son axe central, pendant son guidage par le cadre de support, ladite plaque mobile comportant une surface de moulage résiduelle, un moyen de ressort (14) pour pousser la plaque mobile dans une direction entraînant un débordement du cadre de support, et un moyen de retenue (15) pour définir une position de débordement maximale de la plaque mobile ;
ledit élément de retenue comprenant un élément de vis mâle (15), s'étendant à travers le cadre de support (12), ledit élément de vis mâle comportant une extrémité de pointe engagée par filetage dans la plaque mobile (13), et une tête engagée dans le cadre de support.

2. Moule de vulcanisation d'un bandage pneumatique (1), comprenant : plusieurs segments (21) pour mouler une partie de bande de roulement du bandage pneumatique, des éléments annulaires de moulage des flancs (6) pour mouler les parties de flanc du bandage pneumatique, et des éléments annulaires de moulage des talons (7) pour mouler les parties de talon du bandage pneumatique, dans lequel :
lesdits segments (21) comprennent chacun un support (22) ayant une forme plane arquée, plusieurs pièces de moulage (23) alignées les unes avec les autres sur un côté périphérique interne du support, lesdites pièces de moulage pouvant être déplacées dans une direction radiale, pendant leur guidage par le support et comportant chacune une surface de moulage, un moyen de ressort (24) pour pousser chaque dite pièce de moulage radialement vers l'intérieur, et un moyen de retenue (25) pour définir une position de débordement maximale de la pièce de moulage par rapport au support;
ledit moyen de retenue comprenant un élément de vis mâle (25), s'étendant à travers le support (22), ledit élément de vis mâle comportant une extrémité de pointe engagée par filetage dans la pièce de moulage (23), et une tête engagée dans le support.

3. Moule de vulcanisation d'un bandage pneumatique selon les revendications 1 ou 2, dans lequel la position à débordement maximale de la plaque mobile (13) ou de la pièce de moulage (23) est définie en présence d'une force de poussée exercée par ledit moyen de ressort (14 ; 24).

4. Moule de vulcanisation d'un bandage pneumatique selon l'une quelconque des revendications 1 à 3, comprenant en outre une cale agencée entre la tête de l'élément de vis mâle (15 ; 25) et le cadre de support (12) ou le support (22).

5. Moule de vulcanisation d'un bandage pneumatique selon l'une quelconque des revendications 1 à 4, comprenant en outre un élément d'arrêt (17), agencé entre le cadre de support (12) et la plaque mobile (13), ou entre le support (22) et la pièce de moulage (23), pour définir une limite d'approche entre eux.

6. Moule de vulcanisation d'un bandage pneumatique selon la revendication 1 ou selon l'une quelconque des revendications 3 à 5, dans lequel lesdits éléments annulaires de moulage des talons (7) sont intégrés dans ladite plaque mobile (13).
